# EUROPEAN PATENT APPLICATION

(11) **EP 4 674 993 A1**
(43) Date of publication of application: **07.01.2026**
(21) Application number: 24306134.8
(22) Date of filing: 05.07.2024
(51) Int. Cl.: C22B 3/06, C22B 3/14, C22B 3/44, C22B 7/00, C22B 26/12, H01M 10/54, C01G 45/00, C22B 47/00, H01M 4/525

(54) **PROCESS FOR SELECTIVE EXTRACTION AND RECOVERY OF CHEMICAL ELEMENTS FROM A POLYMETALLIC SAMPLE**

(71) Applicant: Mecaware, 69210 Bully (FR)
(72) Inventor: Monot, Camille, 29260 PLOUIDER (FR); Caillon, Jean, 69003 LYON (FR)
(74) Representative: Cabinet Becker et Associés

(57) **Abstract**

The invention relates to a process for separating chemical elements from a polymetallic solid sample, such as a sample originating from end-of-life batteries. The process comprises a step of recovering nickel and/or cobalt in a solid form after contacting the sample with ammonium carbonate and a reducing agent. The process comprises a further step of recovering manganese in a solid form after contacting the sample with ammonium carbonate.

## Description

### TECHNICAL FIELD

The invention relates to a process for separating chemical elements from a polymetallic solid sample.

### TECHNICAL BACKGROUND

Energy storage has become a global issue and a major challenge. Since the 1980s, the annual world consumption of oil has become greater than the quantities of new deposits discovered. It is therefore necessary to turn to other sources of energy, such as renewable energies, and to develop technologies for the storage of these energies in order to better manage these resources. Efforts to reduce oil consumption are particularly linked to the development of electric vehicles and batteries. While Lithium-ion batteries are now commonly used in computers and mobile phones, there remains some limitations for large-scale applications like electric vehicles. In particular, such applications require high amounts of strategic metals, such as cobalt or rare earth metals, which are expensive. The development of effective and selective recycling processes is therefore crucial in this field.

To date, few methods for capturing and separating strategic metals, such as those contained in batteries, have been developed.

Once collected, used batteries are processed in order to obtain a metallic mixture called the black mass, regrouping valuable metals, such as lithium, cobalt, nickel, manganese and aluminum, as oxides. Classical treatment and separation methods from black mass, such as hydrometallurgic separation methods, most involve the use of acidic conditions for leaching metals from the battery black mass. At the end of the process, recovering the metals as useful salts usually requires the use of separation techniques such as liquid-liquid extraction, which involve large amounts of effluents.

For numerous reasons, including environmental and cost reasons, the use of great amounts of acids is to be avoided in industries. Similarly, the amount of effluents to be produced is to be reduced as much as possible.

WO 2023/242129 discloses a process for selectively capturing chemical elements from a polymetallic liquid sample, such as a sample obtained by acidic dissolution of black mass. The process disclosed in WO 2023/242129 involves selective dissolution and precipitation steps of nickel and cobalt, such steps involving numerous individual steps, and involving numerous reagents, thereby producing substantial amounts of waste and/or effluents.

Thus, there remains a need to provide separation processes allowing the recovery of chemical elements from polymetallic samples, which would involve lower amounts of acid. Advantageously, the process should allow an easy recovery of the metallic elements, for instance as salts which precipitate and thus do not need liquid-liquid extractions to be implemented. Finally, the process should advantageously imply as few steps as possible.

### SUMMARY OF THE INVENTION

In this respect, the inventors have evidenced that it was possible to efficiently extract manganese, nickel and cobalt from a polymetallic sample, such as black mass, by selective leaching. This process uses combinations of simple water-soluble inorganic reactants, such as ammonium carbonate, sulfite salt or diluted sulfuric acid. The process additionally requires low amounts of acid. Advantageously, once extracted, the targeted chemical elements are selectively precipitated by heating of the aqueous solutions extraction at a precise determined temperature. In addition, the precipitated chemical elements are obtained in a convenient and directly marketable form, typically in the form of a carbonate, a hydroxide, an oxide or a hydroxycarbonate salt.

Thus, the present invention relates to a process for separating chemical elements M1, M2 and M3 contained in a solid sample, said process comprising the steps of:
a) contacting said solid sample with ammonium carbonate and a reducing agent in an aqueous suspension, so as to obtain a first liquid phase enriched in M1 and M2, and a first solid residue,
b) separating said first liquid phase and said first solid residue,
c) heating the first liquid phase to a temperature T1, so as to obtain M1 and optionally M2 in a solid form and a second liquid phase,
d) recovering M1 and optionally M2 in a solid form,
e) heating the second liquid phase to a temperature T2, so as to obtain M2 in a solid form and a third liquid phase,
f) recovering M2 in a solid form,
g) contacting the first solid residue with an acidic solution, so as to obtain a fourth liquid phase enriched in M3 and a second solid residue,
h) contacting the fourth liquid phase enriched in M3 with ammonium carbonate, and
i) recovering M3 in a solid form from the fourth liquid phase,
wherein one of M1 and M2 is nickel and the other one of M1 and M2 is cobalt, and M3 is manganese.

In some embodiments, M1 in a solid form is a carbonate, a hydroxide, an oxide, or a combination thereof, of M1, preferably a hydroxycarbonate of M1.

In some embodiments, M2 in a solid form is a carbonate, a hydroxide, an oxide, or a combination thereof, of M2, preferably a hydroxycarbonate of M2.

In some embodiments, in step a), ammonium carbonate is generated *in situ* in the solution, by contacting CO₂ with ammonia.

In some embodiments, in step a), the reducing agent is a sulfite salt, preferably sodium sulfite or ammonium sulfite.

In some embodiments, in step c), said temperature T1 is comprised between 60°C and 100°C, preferably between 70°C and 90°C.

In some embodiments, step c) is carried out under an inert atmosphere.

In some embodiments, steps c) and d) are repeated at least once, each iteration of step c) being implemented with the second liquid phase recovered at the previous iteration of step d).

In some embodiments, steps c)-d) comprise:
i) heating the first liquid phase to said temperature T1, so as to obtain M1 in a solid form and a liquid phase L1,
ii) recovering M1 in a solid form,
iii) heating the liquid phase L1 to said temperature T1, so as to obtain M1 and M2 in a solid form and said second liquid phase, and
iv) recovering M1 and M2 in a solid form.

In some embodiments, in step e), said temperature T2 is comprised between 100°C and 150°C, preferably between 110°C and 140°C.

In some embodiments, step e) is carried out under an inert atmosphere.

In some embodiments, in step g), the acidic solution is a solution of sulfuric acid.

In some embodiments, M3 in a solid form is recovered as manganese carbonate.

In some embodiments, the solid sample is originating from a battery or a used battery, preferably depleted in lithium, copper and/or aluminum.

In some embodiments, separating step b) is a filtration or a centrifugation, preferably a filtration.

In some embodiments, the concentration of the solid sample of step a) is comprised between 50 g/L and 300 g/L, preferably it is about 200 g/L.

### DETAILED DESCRIPTION OF THE INVENTION

A first object of the invention is a process for separating chemical elements M1, M2 and M3 contained in a solid sample, said process comprising the steps of:
a) contacting said solid sample with ammonium carbonate and a reducing agent in an aqueous suspension, so as to obtain a first liquid phase enriched in M1 and M2, and a first solid residue,
b) separating said first liquid phase and said first solid residue,
c) heating the first liquid phase to a temperature T1, so as to obtain M1 and optionally M2 in a solid form and a second liquid phase,
d) recovering M1 and optionally M2 in a solid form,
e) heating the second liquid phase to a temperature T2, so as to obtain M2 in a solid form and a third liquid phase,
f) recovering M2 in a solid form,
g) contacting the first solid residue with an acidic solution, so as to obtain a fourth liquid phase enriched in M3 and a second solid residue,
h) contacting the fourth liquid phase enriched in M3 with ammonium carbonate, and
i) recovering M3 from the fourth liquid phase,
wherein one of M1 and M2 is nickel and the other one of M1 and M2 is cobalt, and M3 is manganese.

*"M1 in a solid form"* refers to a solid, in particular a solid salt, comprising the chemical element M1. Preferably, *"M1 in a solid form"* is a carbonate of M1, a hydroxide of M1, an oxide of M1, or a combination thereof. A particular combination is a carbonate-hydroxide (or hydroxycarbonate) of M1.

As used herein, "*M2 in a solid form*" refers to a solid, in particular a solid salt, comprising the chemical element M2. Preferably, "*M2 in a solid form*" is a carbonate of M2, a hydroxide of M2, an oxide of M2, or a combination thereof. A particular combination is a carbonate-hydroxide (or hydroxy carbonate) of M2.

As used herein, "*M2 in a solid form*" refers to a solid, in particular a solid salt, comprising the chemical element M3. Preferably, "*M3 in a solid form*" is a carbonate of M3, a hydroxide of M3, an oxide of M3 or a combination thereof. A particular combination is a carbonate-hydroxide (or hydroxycarbonate) of M3.

The process of the invention allows to separate, capture, isolate, and/or recover several chemical elements contained in a solid sample, by a succession of steps of contacting said solid sample with liquid solutions, and separating the resulting solid residue and liquid phase. Typically, each liquid phase is enriched in one or two chemical elements originally contained in the solid sample. Once isolated, each liquid phase is treated in order to recover at least one chemical element originally contained in the solid sample in a solid form, in particular in the form of a salt such as a carbonate, a hydroxide, an oxide, a hydroxycarbonate or a combination thereof, with a high purity. The duration of each contacting step of the process may be suitably adjusted by the skilled artisan.

Advantageously, at the end of the process of the invention, each of the targeted chemical elements contained in the solid sample is obtained in a solid form, with a yield of at least 75% in regard to the quantity of the chemical element originally contained in the solid sample, and a purity of at least 95%. Each of the targeted chemical elements is obtained in a commercially acceptable solid form.

The term "*commercially acceptable solid form*" or "*commercially acceptable form*" as used herein means any form or solid form that is marketable, can be sold or commercially used, such as carbonate salts or hydroxycarbonate salts.

The process according to the invention comprises at least one, preferably all, of steps a) to i). In some embodiments, steps are implemented in the a) to i) order. In other embodiments, steps may be implemented in a different order. Steps a) and b), when present, are necessarily implemented before all other steps.

In the present invention, each step is described to be implemented on the liquid or solid sample recovered at one of the previous steps, all consecutive steps a) to i) being considered to be implemented. Of course, when not all steps are implemented, each step is performed on the liquid or solid sample recovered at a previously implemented step of the process.

In some embodiments, the process according to the invention may comprise additional preliminary or intermediate steps before and/or between steps a) to i). In some embodiments, intermediate steps are implemented between two steps of the process in order to separate other elements from the sample.

In the present invention, each step is described to be implemented once. In some embodiments, in order to increase the yield and or purity of M1, M2 and/or M3 in a solid form, some steps may be implemented more than once. For instance, steps a) and b) may be carried out at least twice, the second iteration of step a) being implemented on the first solid residue recovered at the first iteration of step b). Steps c) and d) may be carried out at least twice, the second iteration of step c) being implemented on the second liquid phase recovered at the first iteration of step d). Steps e) and f) may be carried out at least twice, the second iteration of step e) being implemented on the third liquid phase recovered at the first iteration of step f). Steps g) and h) may be carried out at least twice, the second iteration of step g) being implemented on the second solid residue recovered at the first iteration of step h). In such embodiments, the recovered solid residues and/or liquid phases of several iterations of the same step may be combined before implementation of the next step of the process.

### Steps a) and b): acid-free dissolution of nickel and cobalt

Steps a) and b) aim at isolating on one side a solid residue enriched in manganese, and on the other side a liquid phase enriched in Ni and Co from the polymetallic solid sample.

The solid sample on which the separating process according to the invention is carried out can be any type of solid sample comprising M1, M2 and M3 as defined herein. It can be a solid sample of any origin. For instance, the solid sample may be originating from a battery, wastes from batteries production, effluents from steel industry or dairy industry, red mud, ores, or fly ash. In a particular embodiment, the solid sample is a sample originating from a battery, for instance a nickel-metal hydride or Li-ion battery, or a component thereof (such as a battery cathode). The solid sample may be of any one of the following formulae: La₂Ni₉CoMn, AlₓFe_{y}Ni_{z}MnCoO with x and y being each independently from 0.1 and 10, and z is an integer from 1 to 8 (preferably 8), LiAl_{w}CuFeNiₖMnCoO with w being from 0.1 and 10 and k is an integer from 1 to 8 (preferably 8), or LiAl_{0.1}Ni_{0.8}Co_{0.1}Mn_{0.1}O. Typically, the solid sample is from a used battery processed to obtained a metallic mixture, called a "*black mass*"*.*

Typically, nickel is comprised in an amount ranging from 25 to 50 wt% in black mass.

Typically, manganese is comprised in an amount ranging from 3 to 10 wt% in black mass.

Typically, cobalt is comprised in an amount ranging from 4 to 12 wt% in black mass.

In some embodiments, the solid sample is a pretreated black mass, wherein the black mas has been previously submitted to at least one, previously all, the following steps:
- Lithium leaching, for instance by chemical leaching with water or ammonium persulfate, optionally aided by mechanochemistry;
- Copper leaching, for instance with ammonium carbonate, and
- Aluminum leaching, for instance with NaOH.

Thus, in some embodiments, the solid sample is a black mass originating from batteries and depleted in lithium, copper and/or aluminum, preferably depleted in lithium, copper and aluminum. In some embodiments, the solid sample comprises less than 2.5 wt % lithium, less than 0.5 wt % copper and/or less than 1 wt % aluminum.

In step a), the solid sample is contacted with ammonium carbonate and a reducing agent in an aqueous suspension, so as to obtain a liquid phase L1 enriched in M1 and M2, and a solid residue S1.

The use of ammonium carbonate with a reducing agent in step a) allows the dissolution of M1 and M2 from the solid sample. Advantageously, more than 95% of M1 and M2 are extracted from the solid sample, and M3 remains in the solid residue.

The solid sample is preferably dispersed in an aqueous solvent, such as water, preferably demineralized water, before being contacted with ammonium carbonate.

The concentration of the solid sample, such as the black mass, in the aqueous solvent may vary in a wide range. In some embodiments, this concentration is comprised between 10 g/L and 500 g/L, preferably between 50 g/L and 300 g/L, more preferably between 100 g/L and 250 g/L, in particular it is about 200 g/L.

In some embodiments, ammonium carbonate in step a) is added to the aqueous solution comprising the solid sample. The amount of ammonium carbonate to be added may be easily determined by one skilled in the art, depending among others on the respective amounts of nickel, cobalt and manganese in the solid sample.

In some embodiments, ammonium carbonate is generated *in situ* in step a), for instance by contacting CO₂ with ammonia, in particular by bubbling CO₂ in ammonia.

The carbon dioxide used in the process of the invention can result from a human activity, of which it represents a waste product; for example, it can originate from combustion flue gases, refinery gas, cement works gas or blast furnace gas.

The concentration of NH₄OH in the ammonia solution may be comprised between 0.05 mol/L and 3 mol/L, preferably comprised between 0.1 mol/L and 2 mol/L. It is within the knowledge of one skilled in the art to determine the necessary amount of carbon dioxide, especially the necessary amount of gaseous carbon dioxide, to be contacted with the ammonia solution in order to obtain the desired amount and/or concentration of ammonium carbonate.

The pH of the aqueous suspension at the beginning of contacting step a) may vary in a wide range. In some embodiments, the pH is comprised between 8 and 12, preferably between 8 and 10.5, more preferably between 8 and 10, even more preferably between 8 and 9.5. In some embodiments, the pH is about 8.5. In some embodiments, such pH is reached by adding carbon dioxide (CO₂) to ammonia, preferably by saturating ammonia with carbon dioxide, for instance by bubbling CO₂ in ammonia.

Ammonia may be present in the aqueous suspension in any suitable amount. In some embodiments, ammonia is present in an amount comprised between 7 and 16 molar equivalents to the total amount of nickel and cobalt in the solid sample, preferably between 7.5 and 15 molar equivalents, more preferably between 7.5 and 12.5 molar equivalents, in particular about 9 molar equivalents.

Ammonia is present in the aqueous suspension either because it was added as such, or because it was produced by dissolution of ammonium carbonate in the aqueous solvent.

The reducing agent may be any suitable reducing agent. One skilled in the art is able to select the suitable reducing agent and its amount depending among others on the respective amounts of nickel, cobalt and manganese in the solid sample.

A "*reducing agent*" is a chemical species that donates an electron to an electron recipient, which is called the oxidizing agent, oxidant, oxidizer, or electron acceptor.

In some embodiments, the reducing agent is a sulfite salt and/or a metal.

In some embodiments, the reducing agent is a sulfite salt, such as sodium sulfite, potassium sulfite or ammonium sulfite, preferably sodium sulfite or ammonium sulfite, in particular sodium sulfite.

In some embodiments, the reducing agent is a metal, such as iron Fe(0), aluminum Al(0) or zinc Zn(0), preferably Fe(0).

The amount of reducing agent may vary in a wide range, depending among others on the amount of ammonium carbonate and on the respective amounts of nickel, cobalt and manganese in the solid sample. In some embodiments, the amount of reducing agent is comprised between 0.1 and 5 molar equivalents to the total amount of manganese, nickel and cobalt in the solid sample, preferably between 0.5 and 3 molar equivalents, more preferably between 0.5 and 1.5 molar equivalents, in particular about 1 molar equivalent.

Step a) may be implemented at any suitable temperature. In some embodiments, step a) is carried out at a temperature between room temperature and 100 °C, for instance between 50°C and 90°C, preferably between 70°C and 90°C, more preferably at about 80°C.

By "*room temperature*", it is meant a temperature comprised between about 15°C and 25°C.

Step a) may be implemented for any suitable duration. In some embodiments, step a) is carried out for a duration comprised between 15 minutes and 24 hours, preferably between 1 hour and 10 hours, more preferably between 2 hours and 6 hours, in particular for about 4 hours.

Step a) is preferably carried out under stirring, such as magnetic stirring.

At the end of step a), liquid phase L1 is enriched in M1 and M2, preferably in the form of metal-ammonia complexes. At the end of step a), solid residue S1 is depleted in M1 and M2.

In some embodiments, liquid phase L1 comprises at least 70% of M1 and/or at least 70% of M2 originally contained in the solid sample. For instance, liquid phase L1 may comprise at least 80% of M1 and/or at least 80% of M2, or at least 90% of M1 and/or at least 90% of M2, or at least 95% of M1 and/or at least 95% of M2 originally contained in the solid sample. In a preferred embodiments, liquid phase L1 comprises at least 95% of M1 and at least 95% of M2 originally contained in the solid sample.

Separation step b) may be implemented by any suitable technique known in the art. More generally, separation steps b), d), f) and i) can be independently carried out by process known by the skilled artisan. For instance, the separating steps can be carried out by decantation, centrifugation or filtration. In some embodiments, each of steps b), d), f) and i) is independently a filtration or a centrifugation, preferably a filtration.

In some embodiments, step b) is implemented by filtration with a pore size comprised between 0.5 micrometer and 5 micrometers, preferably comprised between 0.5 micrometer and 2 micrometers, more preferably a pore size of about 1 micrometer.

### Steps c) and d): selective precipitation of M1

Steps c) and d) aim at selectively precipitating M1, preferably nickel, and optionally M2, preferably cobalt.

Step c) is implemented on the first liquid phase obtained at steps a) and b) and comprises heating said first liquid phase to a temperature T1.

Temperature T1 may be determined by one skilled in the art, so as to allow precipitation of M1 and optionally M2. In some embodiments, T1 is comprised between room temperature and 100°C, preferably between 50°C and 95°C, more preferably between 70°C and 90°C, in particular about 80°C.

In some embodiments, step c) is implemented at ambient pressure. In other embodiments, step c) may be implemented at lower pressures, such as at a pressure comprised between 50 and 500 mbar, preferably comprised between 100 and 400 mbar, more preferably about 200 mbar. In such embodiments, the temperature T1 is generally lower than the temperature T1 to be used at ambient pressure, all other parameters being the same. In some embodiments, T1 is the boiling temperature of the reaction medium.

In some embodiments, step c) is implemented under a nitrogen flow, under a flow of compressed air, or without any gas flow. Preferably, step c) is implemented under a nitrogen flow.

The duration of step c) may vary in a wide range. In some embodiments, step c) is carried out until complete precipitation of M1. Typically, the duration of step c) may be comprised between 5 minutes and 10 hours, preferably between 30 minutes and 5 hours, more preferably between 1 hour and 4 hours.

In some embodiments, the gas phase that evaporates during step c) comprises ammoniac and carbon dioxide and it may be recovered at least partially by absorption with a suitable absorbent, such as water or any other known absorbent in the art, for further use or treatment.

In some embodiments, only M1 precipitates. In some embodiments, at least 75%, preferably at least 80%, more preferably at least 90%, in particular at least 95%, of M1 present in the solid sample precipitates at step c).

In some embodiments, M1 and M2 precipitate at step c). In some embodiments, at most 25%, preferably at most 20%, more preferably at most 10%, in particular at most 5%, of M2 present in the solid sample precipitates at step c). In such embodiments, M1 and M2 may precipitate as a mixed solid form, such as a mixed nickel cobalt carbonate.

M1 in a solid form is preferably a hydroxycarbonate, more preferably it is nickel hydroxycarbonate.

Separation step d) may be implemented by any suitable technique known in the art. In some embodiments, step d) is implemented by filtration with a pore size comprised between 0.5 micrometer and 5 micrometers, preferably comprised between 0.5 micrometer and 2 micrometers, more preferably a pore size of about 0.7 micrometer or about 1 micrometer.

Separation step d) may include at least one further washing, rinsing and/or drying step of the recovered M1 and/or M2 in a solid form.

More generally, in the present invention, when M1, M2 and/or M3 is recovered as a solid form, the corresponding separation step may include at least one further washing, rinsing and/or drying step of the recovered M1 and/or M2 and/or M3 in a solid form.

In some embodiments, steps c) and d) are carried out at least twice, preferably they are carried out twice. Preferably, at the first iteration of steps c) and d), only M1 precipitates. Preferably, at the further iterations of steps c) and d), both M1 and M2 precipitate.

### Steps e) and f): selective precipitation of M2

Steps e) and f) aim at selectively precipitating M2, preferably cobalt.

Step e) is implemented on the second liquid phase obtained at steps c) and d) and comprises heating said first liquid phase to a temperature T2.

Temperature T2 may be determined by one skilled in the art, so as to allow precipitation of M2. In some embodiments, T2 is comprised between room temperature and 150°C, preferably between 50°C and 140°C, more preferably between 100°C and 130°C, in particular about 125°C.

If steps c) and e) are carried out at the same pressure, then T2 is preferably higher than T1.

In some embodiments, T2 is the boiling temperature of the reaction medium.

In some embodiments, step e) is implemented under a nitrogen flow, under a flow of compressed air, or without any gas flow. Preferably, step e) is implemented without any gas flow.

The duration of step e) may vary in a wide range. In some embodiments, step e) is carried out until complete precipitation of M2. Typically, the duration of step e) may be comprised between 5 minutes and 10 hours, preferably between 30 minutes and 6 hours, more preferably between 2 hours and 5 hours.

M2 in a solid form is preferably a hydroxycarbonate, more preferably it is cobalt hydroxycarbonate.

Separation step f) may be implemented by any suitable technique known in the art. In some embodiments, step f) is implemented by filtration with a pore size comprised between 0.5 micrometer and 5 micrometers, preferably comprised between 0.5 micrometer and 2 micrometers, more preferably a pore size of about 0.7 micrometer or about 1 micrometer.

Separation step f) may include at least one further washing, rinsing and/or drying step of the recovered M2 in a solid form.

In some embodiments, steps e) and f) are carried out at least twice, preferably they are carried out twice.

### Steps g), h) and i): M3 recovery

Steps g), h) and i) aim at recovering manganese from the first solid residue obtained at steps a) and b). Steps g), h) and i) are implemented after step b). Steps g), h) and i) may be implemented after steps c) to f), but they may alternatively be implemented before steps c) to f) or simultaneously to steps c) to f).

Step g) is the only step of the process involving the use of an acidic solution. The acidic solution may be any acidic solution suitable for solubilizing M3. In some embodiments, the acidic solution is hydrochloric acid or sulfuric acid, preferably sulfuric acid.

The amount of acid is preferably comprised between 0.5 and 3 molar equivalents to the amount of manganese in the first solid residue, preferably between 1 and 2 molar equivalent, in particular about 1.5 molar equivalent. Typically, the amount of acid is such that the pH of the solution is comprised between 2 and 5, preferably comprised between 3 and 4.

The amount of first solid residue in the acidic solution may vary in a wide range. It is preferably comprised between 100 g/L and 600 g/L, more preferably between 100 g/L and 300 g/L, in particular about 200 g/L.

The duration of step g) may vary in a wide range. In some embodiments, the duration of step g) is determined so as to allow complete dissolution of the manganese of the first solid residue in the acidic solution. In some embodiments, the duration of step g) is comprised between 5 minutes and 2 hours, preferably between 10 minutes and 1 hour, more preferably between 20 minutes and 40 minutes, in particular about 30 minutes.

Precipitation step h) aims at transforming the soluble manganese salt obtained at step h) into a non-soluble manganese salt, such as manganese carbonate.

In some embodiments, ammonium carbonate in step h) is added to the fourth liquid phase. The amount of ammonium carbonate to be added may be easily determined by one skilled in the art, depending among others on the amount of manganese in the fourth liquid phase.

In some embodiments, ammonium carbonate is generated *in situ* in step h), for instance by contacting CO₂ with a base, such as potassium hydroxide, sodium hydroxide or ammonia, preferably ammonia, in particular by bubbling CO₂ in the base, preferably in ammonia.

In some embodiments, ammonia is added to the fourth liquid phase until a pH of at least 8, preferably a pH comprised between 9 and 12, in particular a pH of about 11, is reached.

In some embodiments, gaseous carbon dioxide is contacted with the reaction medium comprising ammonia until a pH comprised between 5 and 9, preferably between 7 and 8, in particular about 7.5, is reached.

In some preferred embodiments, step h) is carried out in an inert atmosphere, such as a N₂ atmosphere.

Separation step i) may be implemented by any suitable technique known in the art. In some embodiments, step i) is implemented by filtration with a pore size comprised between 0.5 micrometer and 5 micrometers, preferably comprised between 0.5 micrometer and 2 micrometers, more preferably a pore size of about 0.7 micrometer or about 1 micrometer.

Separation step i) may include at least one further washing, rinsing and/or drying step of the recovered M3 in a solid form.

M3 in a solid form recovered at step i) is preferably a carbonate of M3, *ie* a carbonate of manganese.

In the present application, the term "*about*" (or ca.) preceding a value is well-known to the skilled artisan and means that said value may vary to a certain extent depending on the context in which the term is used. If certain uses of this term are not clear to the skilled artisan depending on the context, then "*about*" means ± 20%, preferably ± 10% of said value.

Unless otherwise indicated, when a range is expressed by means of the expression "*comprised between*", the limit values are included within the range described.

The invention will also be described in further detail in the following examples, which are not intended to limit the scope of this invention, as defined by the attached claims.

### EXAMPLES

### Example 1: Dissolution of nickel (M1) and cobalt (M2) and selective precipitation of nickel (steps a) to d))

60 g of a preliminary treated Black Mass originating from end of life batteries was contacted at 80°C for 4 hours with a solution of ammonium carbonate (NH4)₂CO₃ (130.5 g, 9 eq/n(Ni+Co)) and sodium sulfite Na₂SO₃ (39.65g, 1 eq/n(Ni +Mn+Co)) in 300 mL demineralized water. The concentration of the Black Mass in the solution was of 200 g/L. The resulting suspension was filtered on a filter cloth 1 µm to obtain a solid residue and a liquid phase. The solid residue was washed twice with 3.925g (NH4)₂CO₃ in 100 mL water, once with 100 mL water, and dried.

The liquid phase comprised 98.00% of the nickel of the initial solid sample (black mass), 95.60% of the cobalt of the initial solid sample (black mass) and 0% of the manganese of the initial solid sample (black mass).

The amount of each metal in the liquid solution was determined by inductively coupled plasma optical emission spectroscopy (ICP-OES). In the present examples, the amounts of each metal may be indifferently determined by inductively coupled plasma optical emission spectroscopy (ICP-OES), by X-ray fluorescence and/or by the analysis of ultraviolet spectra.

The same experiment was reproduced with:
- different black mass concentrations (50g/L, 100g/L, 300g/L);
- different pH (10.5, 10, 9.5, 9);
- different amounts of NH₃ (7.5, 12.5, 15 eq/(Ni+Co));
- different amounts of sodium sulfite (0.5, 1.5, 2, 3 eq/(Ni+Mn+Co));
- a different reducing agent: (NH₄)₂SO₃; or
- a different temperature: 60°C.

An efficient separation was obtained for all conditions.

The liquid phase was heated at 80°C under a nitrogen flow until complete precipitation of nickel. Alternatively, the liquid phase was heated under 200 mbar at boiling temperature until complete precipitation of nickel. The resulting precipitate was recovered by filtration of the suspension with a filter cloth 1 µm. The recovered solid was washed and dried.

The recovered solid comprised nickel carbonate, with a purity of 97% in nickel, and 3% in cobalt. No manganese was detected in the solid. The yields in nickel and cobalt in regard to the quantities originally contained in the Black Mass was 91,00% in nickel and 11,70% in cobalt.

The same experiment was reproduced with:
- Different temperatures from room temperature to 90°C;
- Different atmospheres: with compressed air flow or without any gas flow;
- Different pressures: 100 mbar, 400 mbar.

An efficient separation was obtained for all conditions.

### Example 2: Mixed cobalt and nickel precipitation (second iteration of steps c) and d))

The liquid phase obtained in Example 1 was heated at 80°C under a nitrogen flow until complete precipitation was reached, and the resulting precipitate was recovered by filtration of the solution with a filter cloth 1 µm. The recovered solid was washed and dried.

The solid obtained after the second treatment comprised 21% nickel and 79% cobalt. The yield in nickel and cobalt in regard to the quantities originally contained in the Black Mass was 0.50% in nickel and 9.00% in cobalt.

### Example 3: Selective precipitation of cobalt (steps e) and f))

The liquid phase obtained in Example 2 was heated at 125°C (reflux) until complete precipitation was reached. Once complete precipitation was reached, a colorless solution was obtained. The resulting precipitate was recovered by filtration, washed and dried.

The solid recovered comprised cobalt hydroxycarbonate, with a purity of 98% in cobalt, and 2% in nickel. The yield in nickel and cobalt in regard to the quantities originally contained in the Black Mass was of 79,00% in cobalt and 0.30% in nickel.

### Example 4: Selective leaching and precipitation of manganese (steps g) to i))

The solid residue obtained in Example 1 was contacted at room temperature for 30 minutes with a solution of sulfuric acid (14.7 mL H₂SO₄ 20% in 300 mL water, 1.5 eq/n(Mn)). The concentration of the solid residue in solution was of 200 g/L. The resulting solution was filtered to obtain a solid residue and a liquid phase.

The same experiment was reproduced with:
- Different amounts of H₂SO₄ (1 ; 1,25 eq/n(Mn));
- A different concentration of the solid residue (500g/L);
- Different durations: 10 and 20 minutes.

A solution of ammonia was added to the recovered liquid phase under a nitrogen atmosphere until reaching a pH comprised between 10 and 11, such as pH 10.5. Then, CO₂ was bubbled in the solution until reaching pH 7.5. The resulting precipitate was recovered by filtration, washed and dried.

The recovered solid comprised manganese carbonate, with a purity of 97% in manganese, and 3% in nickel. The yields in manganese, nickel and cobalt in regard to the quantities originally contained in the Black Mass were of 78,00% in manganese, 0.30% in nickel and 0.10% in cobalt.

The same experiment was reproduced with:
- Different pH values after ammonia addition (9, 10);
- A different atmosphere: no inert atmosphere for ammonia addition.

### Example 5: Dissolution of nickel (M1) and cobalt (M2) with a different reducing agent

A preliminary treated Jelly Roll Black Mass originating from end of life batteries was contacted at 80°C for 4 hours with a solution of ammonium carbonate (NH₄)₂CO₃ (12 eq/n(Ni+Co)) and iron Fe(0) (1 eq/n(Ni + Co)) in demineralized water. The concentration of the Black Mass in the solution was of 100 g/L.

The liquid phase comprised 80.00% of the nickel of the initial solid sample (black mass), 69% of the cobalt of the initial solid sample (black mass) and 86% of the lithium of the initial solid sample (black mass).

The same experiment was reproduced with a cathode black mass instead of Jelly Roll black mass. The obtained liquid phase comprised 73.00% of the nickel of the initial solid sample (black mass) and 66% of the cobalt of the initial solid sample (black mass).

## Claims

1. A process for separating chemical elements M1, M2 and M3 contained in a solid sample, said process comprising the steps of:
a) contacting said solid sample with ammonium carbonate and a reducing agent in an aqueous suspension, so as to obtain a first liquid phase enriched in M1 and M2, and a first solid residue,
b) separating said first liquid phase and said first solid residue,
c) heating the first liquid phase to a temperature T1, so as to obtain M1 and optionally M2 in a solid form and a second liquid phase,
d) recovering M1 and optionally M2 in a solid form,
e) heating the second liquid phase to a temperature T2, so as to obtain M2 in a solid form and a third liquid phase,
f) recovering M2 in a solid form,
g) contacting the first solid residue with an acidic solution, so as to obtain a fourth liquid phase enriched in M3 and a second solid residue,
h) contacting the fourth liquid phase enriched in M3 with ammonium carbonate, and
i) recovering M3 in a solid form from the fourth liquid phase,
wherein one of M1 and M2 is nickel and the other one of M1 and M2 is cobalt, and M3 is manganese.

2. The process according to claim 1, wherein:
- M1 in a solid form is a carbonate, a hydroxide, an oxide, or a combination thereof, of M1, preferably a hydroxycarbonate of M1, and/or
- M2 in a solid form is a carbonate, a hydroxide, an oxide, or a combination thereof, of M2, preferably a hydroxycarbonate of M2.

3. The process according to claim 1 or claim 2, wherein, in step a), ammonium carbonate is generated *in situ* in the solution, by contacting CO₂ with ammonia.

4. The process according to any one of claims 1 to 3, wherein, in step a), the reducing agent is a sulfite salt, preferably sodium sulfite or ammonium sulfite.

5. The process according to any one of claims 1 to 4, wherein in step c) said temperature T1 is comprised between 60°C and 100°C, preferably between 70°C and 90°C.

6. The process according to any one of claims 1 to 5, wherein step c) is carried out under an inert atmosphere.

7. The process according to any one of claims 1 to 6, wherein steps c) and d) are repeated at least once, each iteration of step c) being implemented with the second liquid phase recovered at the previous iteration of step d).

8. The process according to claim 7, wherein steps c)-d) comprise:
i) heating the first liquid phase to said temperature T1, so as to obtain M1 in a solid form and a liquid phase L1,
ii) recovering M1 in a solid form,
iii) heating the liquid phase L1 to said temperature T1, so as to obtain M1 and M2 in a solid form and said second liquid phase, and
iv) recovering M1 and M2 in a solid form.

9. The process according to any one of claims 1 to 8, wherein in step e), said temperature T2 is comprised between 100°C and 150°C, preferably between 110°C and 140°C.

10. The process according to any one of claims 1 to 9, wherein step e) is carried out under an inert atmosphere.

11. The process according to any one of claims 1 to 10, wherein, in step g), the acidic solution is a solution of sulfuric acid.

12. The process according to any one of claims 1 to 11, wherein M3 in a solid form is recovered as manganese carbonate.

13. The process according to any one of claims 1 to 12, wherein the solid sample is originating from a battery or a used battery, preferably depleted in lithium, copper and/or aluminum.

14. The process according to any one of claims 1 to 13, wherein the separating step b) is a filtration or a centrifugation, preferably a filtration.

15. The process according to any one of claims 1 to 14, wherein the concentration of the solid sample of step a) is comprised between 50 g/L and 300 g/L, preferably it is about 200 g/L.
